# EUROPÄISCHE PATENTSCHRIFT

(11) **EP 0 491 124 B1**
(45) Veröffentlichungstag und Bekanntmachung des Hinweises auf die Patenterteilung: **02.08.1995**
(21) Anmeldenummer: 91116984.5
(22) Anmeldetag: 04.10.1991
(51) Int. Cl.: F16C 33/74

(54) **Lageranordnung**
Bearing
Palier

(30) Priorität: 19.12.1990 DE 4040720
(43) Veröffentlichungstag der Anmeldung: 24.06.1992
(73) Patentinhaber: Liebherr-Werk Bischofshofen GmbH, 5500 Bischofshofen (AT)
(72) Erfinder: Stickler, Johann, Ing., A-5600 St. Johann/Pg (AT); Ganitzer, Florian, A-5611 Gorssarl (AT)
(74) Vertreter: Gossel, Hans K., Dipl.-Ing.

(56) Entgegenhaltungen:
- DE-A- 2 808 159
- DE-B- 1 204 475
- US-A- 2 951 718
- US-A- 2 968 498

## Beschreibung

Die Erfindung betrifft eine Lageranordnung, bestehend aus einer Lagergabel mit zwei zueinander parallelen Schenkeln, die mit fluchtenden Bohrungen versehen sind, und aus einem in den Bohrungen gehalterten Lagerbolzen, der eine Lagerbohrung eines auf diesem gelagerten drehbaren Teils, vorzugsweise eines Schaufelsarms eines Radladers, durchsetzt. Bekannte Gleitlager dieser Art weisen den Nachteil auf, daß durch die Spalte zwischen dem drehbar gelagerten Teil und den benachbarten Wandungen der Lagerschenkel Wasser und insbesondere auch andere agressive Medien eindringen können, die zu einer Korrosion des Lagerbolzens und der Lagerflächen der Lagerbohrung oder des Lagerringes führen, so daß die Lagerung zerstört wird. Eine Korrosion des Lagerbolzens und/oder der Lagerflächen der Lagerbohrung oder des Lagerringes führt dazu, daß sich das Spiel zwischen der Lagerbohrung und der Lagerbolzen vergrößert, so daß dadurch trotz Vorsehens einer Gleitlagerschmierung die Korrosion und Zerstörung des Lagers schneller fortschreitet.

An sich wäre es möglich, die Spalte zwischen dem drehbaren Teil und den Lagerschenkeln durch Dichtringe abzudichten. Der Einbau geeigneter Dichtringe ist jedoch mit besonderen Schwierigkeiten verbunden, da diese entweder nachträglich oder aber zusammen mit dem drehbaren Teil zwischen die Lagerschenkel in radialer Richtung eingeschoben werden müssen, bevor der Lagerbolzen von einer Seite her in der Weise eingeschoben wird, daß er sowohl die Bohrungen der Lagerschenkel als auch der Dichtringe und des Lagers durchsetzt. Bei diesem radialen Einschieben der Dichtringe können jedoch deren Dichtlippen oder Flanken durch Quetschen und/oder Abscheren beschädigt werden.

Weiter ist aus der gattungs gemäßen DE-A-28 08 159 eine Lageranordnung für eine Gleiskette eines Raupenfahrzeuges bekannt, bei der jeweils zwei Gliedwangen, an denen eine Bodenplatte zu befestigen ist, zusammen mit einer Buchse eine Lagergabel bilden und bei der ein Bolzen mit Preßsitz in entsprechende Bohrungen der Gliedwangen eingesteckt ist. Auf diesem Bolzen ist eine Buchse des nächsten Kettenglieds als drehbares Teil gelagert. Die mit Preßsitz auf dem Lagerbolzen angeordnete Gliedwange weist eine zu dem Lagerbolzen konzentrische, zylindrische Aussparung auf, in der mit axialem Spiel ein Haltering mit auf diesem befestigten Lippenring angeordnet ist, deren beide diesen beidseits in axialer Richtung überragenden Dichtlippen ein V-förmiges Profil aufweisen. Bei dieser bekannten Lageranordnung besteht jedoch das Problem nicht, den Dichtring in radialer Richtung einzuschieben, weil er nur in axialer Richtung auf den Bolzen aufgeschoben werden kann, um in die zylindrische Aussparung zu gelangen.

Aufgabe der Erfindung ist es daher, eine Lageranordnung der eingangs angegebenen Art zu schaffen, die sich in einfacher, zuverlässiger und sicherer Weise mit die Spalte zwischen dem drehbaren Teil und den Lagerschenkeln dichtenden Dichtringen versehen läßt.

Erfindungsgemäß wird diese Aufgabe bei einer Lageranordnung der gattungsgemäßen Art durch die kennzeichnenden Merkmale des Anspruchs 1 gelöst, daß beidseits des drehbaren Teils zwischen diesem und dem benachbarten Schenkel der Lagergabel jeweils mit axialem Spiel ein Dichtring mit aufvulkanisiertem oder auf diesem befestigten Lippendichtring, deren beiden diesen beidseits in axialer Richtung überragenden Dichtlippen ein V-förmiges Profil aufweisen, auf dem Lagerbolzen gehaltert ist, daß der Lippendichtring von einem diesen umgebenden Schutz- und Montagering eingefaßt ist, der auf seiner Innenseite mit mindestens einer umlaufenden Nut versehen ist, und daß zum Zwecke der Montage der Schutz- und Montagering derart exzentrisch zu dem Dichtring gehalten ist, daß die äußeren Ränder der beiden zusammengedrückten Dichtlippen mit V-förmigen Profil über einen Teil ihres Umfangs an den inneren Flanken der Nut anliegen. Bei der erfindungsgemäßen Lageranordnung lassen sich die aus den Halteringen mit aufvulkanisierten Lippendichtringen bestehenden Dichtringe in einfacher und sicherer Weise dadurch montieren, daß die Schutz- und Montageringe die äußeren Ränder der Dichtlippen derart zusammendrücken, daß diese die aus Dicht- und Montagering bestehende Montageeinheit nicht überragen. Die aus Dicht- und Montagering bestehende Einheit läßt sich daher zusammen mit dem drehbaren Teil oder auch nachträglich derart zwischen die Lagerschenkel in radialer Richtung einschieben, daß ein Beschädigen der in Einschubrichtung vorn liegenden Teile der Dichtlippen nicht zu befürchten ist, weil diese sicher in der Nut des Schutz- und Montageringes gehalten sind. Der in Einschubrichtung dahinterliegende ungeschützte Teil der Dichtlippen kann bei der Montage nicht beschädigt werden, weil diese bei der Montage nicht gespreizt werden können, sondern in einer Weise zusammengedrückt werden, daß deren Beschädigung nicht zu befürchten ist. Sobald die radial eingeschobene Lagerbohrung und die ebenfalls radial eingeschobenen Dichtringe fluchtend zu den Bohrungen der Lagerschenkel ausgerichtet sind, wird in axialer Richtung der Lagerbolzen eingeschoben und an einem der Lagerschenkel gesichert. Anschließend wird die Einrichtung, die den Schutz- und Montagering in einer exzentrischen Stellung zu dem Dichtring hält, entfernt, so daß die in der Nut des Schutz- und Dichtringes gehalterten Teile der beiden Dichtlippen aus der Nut heraustreten und sich an die seitlichen zueinander parallelen Anlaufflächen der beiden Lagerschenkel und des drehbaren Teils anlegen können. Die Anlaufflächen des drehbaren Teils können im Bereich von dessen Nabe gebildet sein.

Der metallische Haltering vermag auf das drehbare Teil wirkende axiale Kräfte aufzunehmen, so daß diese den Lippendichtring aus Kautschuk oder einem geeigneten elastomerem Werkstoff nicht zerstören können.

Der die Dichtlippen in radialer Richtung einfassende Schutz- und Montagering besteht zweckmäßigerweise ebenfalls aus Metall und schützt die Dichtlippen vor von außen einwirkenden mechanischen Beschädigungen.

Zweckmäßigerweise weisen der Haltering und der Schutz- und Montagering gleiche Breiten auf. Ein gewisses axiales Spiel der Dicht- und Montageringe sichert eine leicht gängige Lagerung.

Die seitlichen Flanken der Halteringe sind parallel zueinander und zu den Anlaufflächen der Lagerschenkel und des drehbaren Teils.

Der Schutz- und Montagering kann auch aus einem Kunststoffspritzgußteil bestehen.

Zweckmäßigerweise ist der Schutz- und Montagering mit zwei durch einen Mittelsteg getrennten Nuten versehen. Bei dieser Ausführungsform taucht ein Teil des Umfangs der Dichtlippen in jeweils eine der beiden durch den Mittelsteg getrennten Nuten ein.

In weiterer Ausgestaltung der Erfindung ist vorgesehen, daß das Profil des Mittelstegs in etwa im Querschnittsprofil der zwischen den beiden Lippen des Lippendichtringes gebildeten Nut in zusammengedruckten und in den beiden Nuten des Schutz- und Montageringes gehalterten Zustand der Lippen entspricht. Auf diese Weise ist der Schutz- und Montagering über die Dichtlippen fest mit dem Haltering verbunden, so daß sich eine stabile Montageeinheit ergibt.

Nach einer vorteilhaften Ausgestaltung der Erfindung ist vorgesehen, daß in einer radialen Bohrung des Schutz- und Montageringes eine Schraube einschraubbar ist, die in den Grund der zwischen den beiden Lippen gebildeten Nut greift und den Schutz- und Montagering in seiner exzentrischen Montagestellung hält. Diese Montagestellung läßt sich nach der Montage durch Entfernen der Halteschraube beseitigen, so daß der zusammengedrückte Teil der beiden Dichtlippen von selbst oder durch radiale Bewegung des Schutz- und Montageringes aus den schützenden Nuten heraustritt.

Der metallische Dichtring kann auf seiner Innenseite mit einer umlaufenden Nut versehen sein, in die ein Dichtring (O-Ring) eingelegt ist.

Ein Ausführungsbeispiel der Erfindung wird nachstehend anhand der Zeichnung näher erläutert. In dieser zeigt
- Fig. 1: einen Längsschnitt durch eine Lageranordnung, durch die ein Schaufelarm eines Radladers zwischen gabelförmigen Schaufellagerblechen gelagert ist,
- Fig. 2: den in Fig. 1 eingekreisten Teil A in vergrößerter Darstellung,
- Fig. 3: einen Längsschnitt durch den aus Haltering mit aufvulkanisiertem Lippendichtring bestehenden Dichtring im entspannten Zustand der Dichtlippen,
- Fig. 4: den Dichtring nach Fig. 3 mit exzentrisch aufgesetztem Schutz- und Montagering in Montagestellung und
- Fig. 5: eine Seitenansicht der aus Dicht- und Schutz- und Montagering bestehenden Montageeinheit.

Die Erfindung wird nachstehend anhand der Lagerung eines Schaufelarms eines Radladers erläutert. Zwischen den die Lagerschenkel einer Lagergabel bildenden rahmenfesten Schaufellagerblechen 1,2 ist auf einem Lagerbolzen 3 der Schaufelarm 14 schwenkbar gelagert. Die Schaufellagerbleche 1,2 sind auf ihren Innenseiten mit ringförmigen Verstärkungsblechen 4,5 versehen. Die Schaufellagerbleche 1,2 sowie die mit diesen verbundenen Verstärkungsringe 4,5 sind mit fluchtenden Bohrungen 6,7 versehen, in denen der Lagerbolzen 3 gehaltert ist. Der Schaufelarm 14 ist mit seitlichen Verstärkungsblechen 8,9 verschweißt, wobei zwischen dem Verstärkungsblech 9 und dem Schaufelarm 14 ein Kanal 10 für Schmiermittel gebildet ist, der in eine Ringnut 11 einer eingesetzten Lagerbuchse 12 aus Lagermetall mündet, die mit radialen Schmiermittelbohrungen 13 versehen ist. Die zwischen den Verstärkungsblechen 4,5 und dem Schaufelarm 8,9,14 gebildeten Spalte 15,16 sind durch Dichtringe 17 abgedichtet. Die Spalte 15,16 sind von den zueinander parallelen Anlaufflächen des Schaufelarms und der Verstärkungsbleche 4,5 gebildet.

Auf den die Bohrung 7 überragenden zapfenförmigen Fortsatz 20 des Lagerbolzens 3 ist ein Halteblech 21 aufgeschweißt. Dieses Halteblech 21 liegt an einer Ringstufe des Lagerbolzens 3 und der mit dieser fluchtenden Außenfläche des Schaufellagerblechs 2 an. Im radialen Abstand von der Lagerbohrung 7 ist auf die Außenseite des Schaufellagerblechs 2 ein konusförmiger Zapfen 24 aufgeschweißt, der mit einer Gewindebohrung versehen ist. Diesen konusförmigen Zapfen 24 faßt eine komplementäre Bohrung des Halteblechs 21 ein. In die Gewindebohrung des Haltezapfens 24 ist über eine ringförmige Scheibe 26 ein Schraubbolzen 27 aufgeschraubt, der das Halteblech 21 mit dem konusförmigen Zapfen 24 in der Weise verspannt, daß jegliche Radialbewegung des Lagerbolzens 3 relativ zu dem Schaufellagerblech 2 aufgehoben ist.

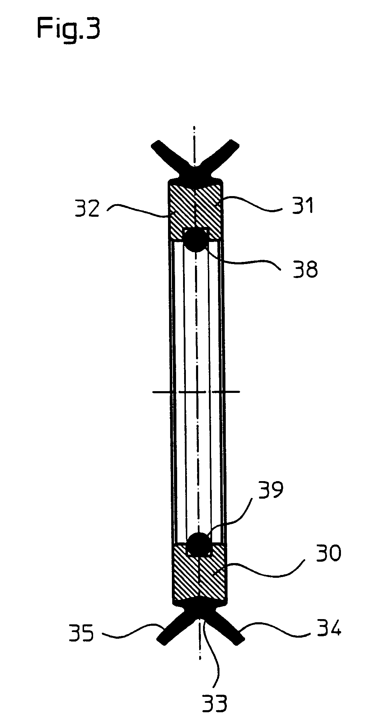

Der Dichtring 17 besteht aus einem metallischen Haltering 30 mit zueinander parallelen ebenen Seitenflächen 31,32. Auf die Umfangsfläche des Halterings 30 ist ein Lippendichtring 33 aufvulkanisiert, der zwei Dichtlippen 34,35 mit V-förmigen Profil aufweist. In dem aus Fig. 3 ersichtlichen Zustand bilden die beiden Dichtlippen 34,35 ein flaches V-förmiges Profil, so daß sie die seitlichen Flanken 31,32 des Halterings 30 beträchtlich überragen.

In seiner inneren Umfangsfläche ist der Haltering 30 mit einer umlaufenden Nut 38 versehen, in die ein O-Ring 39 eingelegt ist.

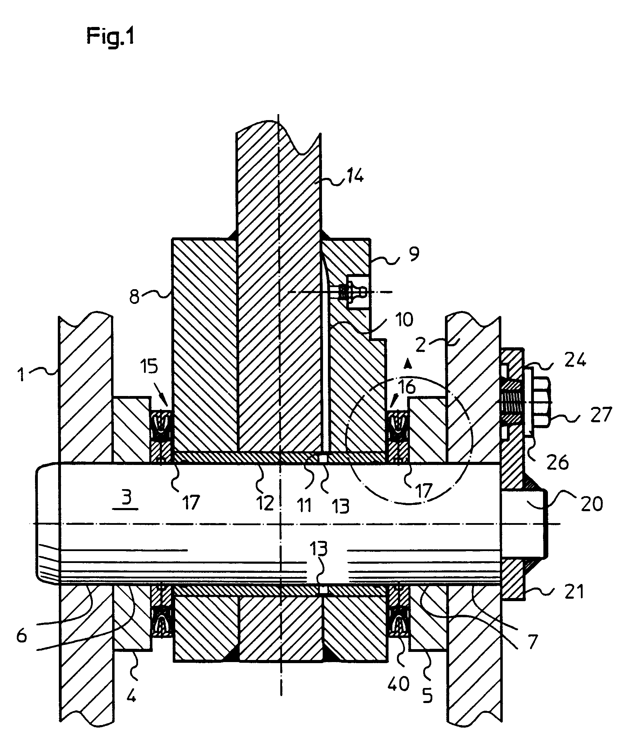

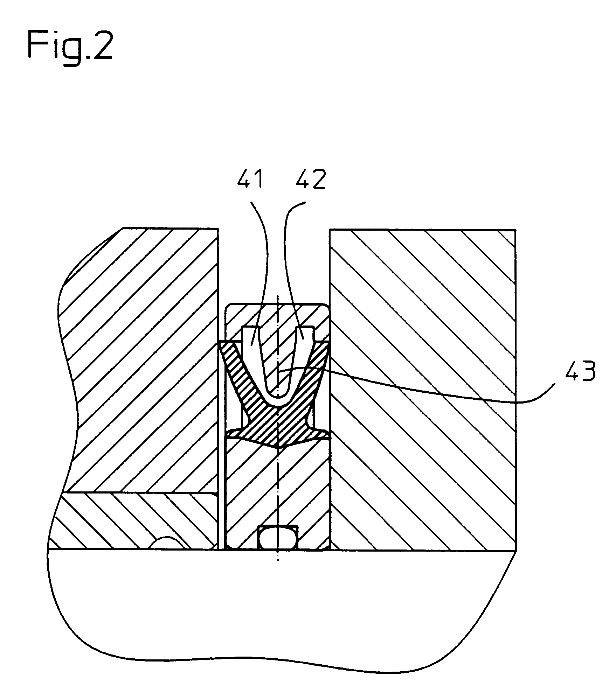

Der Dichtring 17 ist mit einem diesen einfassenden Schutz- und Montagering 40 versehen, der auf seiner Innenseite mit zwei umlaufenden Nuten 41,42 versehen ist, die durch ein mittleres Stegteil 43 voneinander getrennt sind. Dieses Stegteil 43 greift in der aus den Fig. 1 und 2 ersichtlichen Weise im montierten Zustand zwischen die beiden Dichtlippen 34,35.

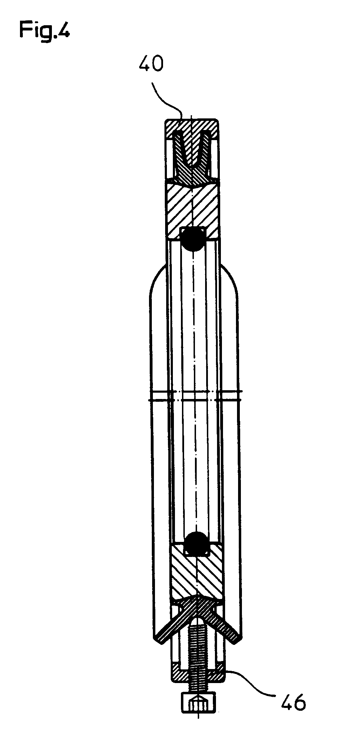

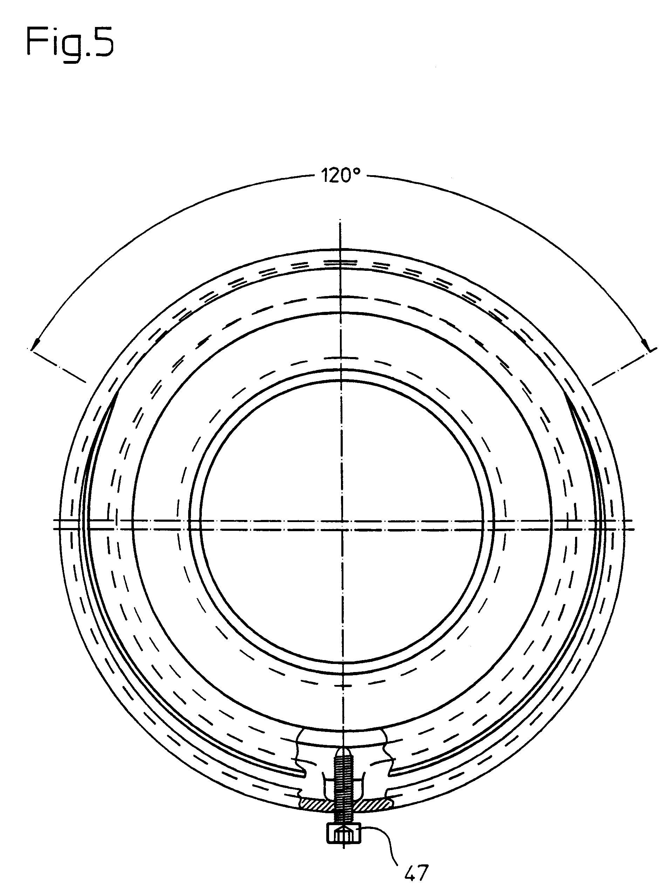

Zum Zwecke der Montage werden über einen Umfangsbereich von etwa 120° die Ränder der Dichtlippen 34,35 in die Nuten 41,42 hineingedrückt und in diesen gehalten. Um den Dichtring und den Schutz- und Montagering 40 in dieser exzentrischen Montagestellung zu halten, ist in eine radiale Bohrung 46 des Schutz- und Montageringes 40 eine Stutzschraube 47 eingeschraubt, die sich im Grund der zwischen den Dichtlippen 34,35 gebildeten Nut in der aus den Fig. 4 und 5 ersichtlichen Weise abstützt. Im Bereich der radialen Gewindebohrung 46 ist der Mittelsteg 43 in der aus Fig. 5 ersichtlichen Weise unterbrochen.

Zur Montage der Lageranordnung werden der Schaufelarm 8,9,14 und die in ihrer Montagestellung befindlichen, aus Dicht- und Schutz- und Montageringen bestehenden Einheiten in radialer Richtung zwischen die eine Lagergabel bildenden Schaufellagerbleche derart eingeschoben, daß sie mit den Bohrungen 6,7 fluchten. In dieser Stellung wird der Lagerbolzen 3 in Fig. 1 von der rechten Seite her durch die Bohrungen hindurchgeschoben und durch das Sicherungsblech 21 gesichert.

Die aus Lagerring 17 und Schutz- und Montagering 40 bestehende Einheit wird dadurch zur Montage vorbereitet, daß der Schutz- und Montagering über den Lagerring gelegt und die Doppellippen 34,35 auf einer Seite in die Nuten 41,42 eingelegt werden. Anschließend wird die Stützschraube 47 soweit angezogen, bis die Dichtlippen satt an dem Schutz- und Montagering anliegen.

Nach der Montage wird die Stützschraube 47 entfernt. Zur Kontrolle kann radialer Druck auf die Schutz- und Montageringe 40 ausgeübt werden, so daß die Dichtlippen aus den Nuten 41,42 herausspringen und die erforderliche Dichtfunktion gegeben ist.

## Patentansprüche

1. Lageranordnung, bestehend aus
einer Lagergabel mit zwei zueinander parallelen Schenkeln (1, 4; 2, 5), die mit fluchtenden Bohrungen (6, 7) versehen sind, und aus
einem in den Bohrungen (6, 7) gehalterten Lagerbolzen (3), der eine Lagerbohrung eines auf diesem gelagerten, drehbaren Teils, vorzugsweise eines Schaufelarms (8, 9, 14) eines Radladers, durchsetzt,
wobei beidseits des drehbaren Teils (8, 9, 14) zwischen diesem und dem benachbarten Schenkel (1, 4; 2, 5) der Lagergabel jeweils mit axialem Spiel ein Haltering (30) mit aufvulkanisiertem oder auf diesem befestigten Lippendichtring (33), deren beiden, diesen beidseits in axialer Richtung überragenden Dichtlippen (34, 35) ein V-förmiges Profil aufweisen, auf dem Lagerbolzen (3) gehaltert ist,
**dadurch gekennzeichnet**,
daß der Lippendichtring (33) von einem diesen umgebenden Schutz- und Montagering (40) eingefaßt ist, der auf seiner Innenseite mit mindestens einer umlaufenden Nut (41, 42) versehen ist, und
daß zum Zwecke der Montage eine Einrichtung (46, 47) vorgesehen ist, mit der der Schutz- und Montagering (40) derart exzentrisch zu dem aus Haltering und Lippendichtring bestehenden Dichtring (17) gehalten werden kann, daß die äußeren Ränder der beiden Dichtlippen (34, 35) mit V-förmigem Profil über einen Teil ihres Umfangs zusammengedrückt werden und mit diesem Teil an den inneren Flanken der Nut (41, 42) anliegen.

2. Lageranordnung nach Anspruch 1, dadurch gekennzeichnet, daß der Schutz- und Montagering (40) mit zwei durch einen Mittelsteg (43) getrennten Nuten (41,42) versehen ist.

3. Lageranordnung nach Anspruch 2, dadurch gekennzeichnet, daß das Profil des Mittelstegs (43) in etwa dem Querschnittsprofil der zwischen den beiden Lippen (34,35) des Lippendichtringes (33) gebildeten Nut in zusammengedrückten und in den beiden Nuten des Schutz- und Montageringes (40) gehalterten Zustand der Lippen (34,35) entspricht.

4. Lageranordnung nach einem der Ansprüche 1-3, dadurch gekennzeichnet, daß in einer radialen Bohrung des Schutz- und Montageringes (40) eine Schraube (47) einschraubbar ist, die in den Grund der zwischen den beiden Lippen (34,35) gebildeten Nut greift und den Schutz- und Montagering (40) in seiner zu dem Dichtring exzentrischen Montagestellung halten kann.

5. Lageranordnung nach einem der Ansprüche 1 bis 4, dadurch gekennzeichnet, daß der metallische Haltering (30) auf seiner Innenseite mit einer umlaufenden Nut (38) versehen ist, in die ein Dichtring, vorzugsweise ein O-ring, eingelegt ist.

## Claims

1. A bearing arrangement consisting of
a bearing yoke with two arms (1, 4; 2, 5) parallel to each other which are provided with aligned bores (6, 7) and
a bearing pin (3) mounted in the bores (6, 7) which passes through a bearing bore of a rotatable part mounted thereon, preferably of a shovel arm (8, 9, 14) of a wheeled loader,
in which arrangement, there is respectively mounted on the bearing pin (3), with axial play on both sides of the rotatable part (8, 9, 14) between the latter and the adjoining arm (1, 4; 2, 5) of the bearing yoke, a holding ring (30) with a lip-seal ring (33) attached by vulcanization or secured thereto, whose two sealing lips (34, 35) projecting over it on both sides in the axial direction have a V-shaped profile,
characterized in that
the lip-seal ring (33) is enclosed in a protective and mounting ring (40) surrounding it, which is provided on its inner side with at least one peripheral groove (41, 42), and
that for the purpose of the mounting, provision is made for a device (46, 47) by means of which the protective and mounting ring (40) can be held eccentrically to the sealing ring (17) consisting of the holding ring and lip-seal ring in such a way that the outer edges of the two sealing lips (34, 35) with their V-shaped profile are compressed over a portion of their circumference and bear with this portion on the inner sides of the groove (41, 42).

2. A bearing arrangement according to claim 1, characterized in that the protective and mounting ring (40) is provided with two grooves (41, 42) separated by a central fin (43).

3. A bearing arrangement according to claim 2, characterized in that the profile of the central fin (43) corresponds approximately to the cross-sectional profile of the groove formed between the two sealing lips (34, 35) of the lip-seal ring (33) in the compressed state of the sealing lips (34, 35) and held in the two grooves of the protective and mounting ring (40).

4. A bearing arrangement according to one of claims 1 to 3, characterized in that a screw (47) can be screwed into a radial bore of the protective and mounting ring (40), which screw reaches into the bottom of the groove formed between the two sealing lips (34, 35) and is capable of holding the protective and mounting ring (40) in its mounted position that is eccentric to the sealing ring.

5. A bearing arrangement according to one of claims 1 to 4, characterized in that the metal holding ring (30) is provided on its inner side with a peripheral groove (38) into which there is inserted a sealing ring, preferably an O-ring.

## Revendications

1. Palier constitué d'une fourche de palier avec deux branches parallèles l'une à l'autre (1, 4; 2, 5) pourvues d'alésages alignés (6, 7) et d'un boulon de palier (3) retenu dans les alésages (6, 7) qui traverse un alésage de palier d'une partie tournante montée sur celui-ci, de préférence d'un bras collecteur (8, 9, 14) d'une chargeuse sur roues, dans lequel est retenu , sur le boulon de palier (3), de part et d'autre de la partie tournante (8, 9, 14), entre celle-ci et la branche avoisinante (1, 4 ; 2, 5) de la fourche de palier, respectivement avec un jeu axial, un anneau de retenue (30) sur lequel est rapporté par vulcanisation ou sur lequel est fixé un anneau d'étanchéité à lèvres (33) dont les deux lèvres d'étanchéité (34, 35) faisant saillie sur celui-ci des deux côtés dans la direction axiale, présentent un profil en forme de V, caractérisé en ce que l'anneau d'étanchéité à lèvres (33) est encerclé par un anneau de protection et de montage (40) entourant celui-ci qui est pourvu sur son côté intérieur d'au moins une rainure (41, 42) s'étendant tout autour et en ce qu'il est prévu pour le montage un dispositif (46, 47) qui permet de maintenir l'anneau de protection et de montage (40) de façon excentrique à l'anneau d'étanchéité (17) constitué de l'anneau de retenue et de l'anneau d'étanchéité à lèvres, de telle sorte que les bords extérieurs des deux lèvres d'étanchéité (34, 35) d'un profil en forme de V soient comprimés sur une partie de leur pourtour et s'appliquent avec cette partie aux flancs intérieurs de la rainure (41, 42).

2. Palier selon la revendication 1, caractérisé en ce que l'anneau de protection et de montage (40) est pourvu de deux rainures (41, 42) séparées par une barrette centrale (43).

3. Palier selon la revendication 2, caractérisé en ce que le profil de la barrette centrale (43) correspond à peu près au profil en section transversale de la rainure formée entre les deux lèvres (34, 35) de l'anneau d'étanchéité à lèvres (33) lorsque les lèvres (34, 35) sont dans l'état comprimé et sont retenues dans les deux rainures de l'anneau de protection et de montage (40).

4. Palier selon l'une des revendications 1 à 3, caractérisé en ce qu'une vis (47) peut être vissée dans un alésage radial de l'anneau de protection et de montage (40) qui s'engage dans le fond de la rainure formée entre les deux lèvres (34, 35) et qui peut maintenir l'anneau de protection et de montage (40) dans sa position de montage excentrique relativement à l'anneau d'étanchéité.

5. Palier selon l'une des revendications 1 à 4, caractérisé en ce que l'anneau de retenue métallique (30) est pourvu sur son côté intérieur d'une rainure (38) s'étendant tout autour dans laquelle est placé un joint d'étanchéité, de préférence un joint torique.
